# EUROPÄISCHE PATENTSCHRIFT

(11) **EP 1 728 015 B1**
(45) Veröffentlichungstag und Bekanntmachung des Hinweises auf die Patenterteilung: **07.05.2008**
(21) Anmeldenummer: 05715489.0
(22) Anmeldetag: 24.02.2005
(51) Int. Cl.: F16L 3/23, F16L 3/26, H02G 3/04

(54) **VORRICHTUNG ZUR AUFNAHME VON LÄNGLICHEN GEGENSTÄNDEN**
DEVICE FOR RECEIVING OBLONG OBJECTS
DISPOSITIF DESTINE A RECEVOIR DES OBJETS DE FORME ALLONGEE

(30) Priorität: 16.03.2004 DE 102004013010
(43) Veröffentlichungstag der Anmeldung: 06.12.2006
(73) Patentinhaber: A. RAYMOND ET CIE, 38000 Grenoble (FR)
(72) Erfinder: KURTH, Martin, 79576 Weil am Rhein-Ötlingen (DE)
(74) Vertreter: Rüttgers, Joachim
(86) Internationale Anmeldenummer: PCT/EP2005/001910
(87) Internationale Veröffentlichungsnummer: WO 2005/095837

(56) Entgegenhaltungen:
- EP-A- 1 162 709
- US-A- 3 090 826
- US-A- 6 164 603

## Beschreibung

Die Erfindung betrifft eine Vorrichtung zur Aufnahme von länglichen Gegenständen, insbesondere von elektrischen Leitungen und/oder Fluidleitungen.

Derartige Vorrichtungen (siehe z.B EP 1 162 709), die üblicherweise ein Aufnahmeteil mit einer Bodenwand und zwei Randwänden sowie ein schwenkbar an dem Aufnahmeteil angebrachtes Deckelteil aufweisen, werden beispielsweise im Automobilbau eingesetzt, um elektrische Leitungen in einer bestimmten Art und Weise zu verlegen. Dabei werden die Leitungen in das Aufnahmeteil eingelegt, und nach Schließen des Deckelteiles sind sie in der Vorrichtung sicher gehalten. Zwar können mit den vorbekannten Vorrichtungen längliche Gegenstände sicher gehalten und geführt werden, allerdings sind sie in der Regel für eine spezifische Einbauumgebung ausgelegt und daher nicht oder nur mit häufig unerwünschten Nachteilen in einer anderen Einbauumgebung einsetzbar.

Der Erfindung liegt die Aufgabe zugrunde, eine Vorrichtung zur Aufnahme von länglichen Gegenständen anzugeben, die sich durch eine gewisse Variabilität in ihren Einbaumöglichkeiten auszeichnet.

Diese Aufgabe wird erfindungsgemäß gelöst mit einer Vorrichtung zur Aufnahme von länglichen Gegenständen, insbesondere von elektrischen Leitungen und/oder Fluidleitungen, mit einem eine Bodenwand und zwei sich gegenüberliegende Randwände aufweisenden Aufnahmeteil sowie mit einem über ein Randscharnier schwenkbar an dem Aufnahmeteil angebrachten Deckelteil, das über eine dem Randscharnier gegenüberliegende Verschlussanordnung mit dem Aufnahmeteil verbindbar ist, wobei das Deckelteil wenigstens drei Abdeckabschnitte aufweist, wobei jeweils zwischen benachbarten Abdeckabschnitten ein Mittenscharnier ausgebildet ist und wobei die Verschlussanordnung eine der Anzahl der Mittenscharniere entsprechende Anzahl von Schließstellungen bereitstellt, in denen die Abdeckabschnitte in unterschiedlichen Abständen von der Bodenwand angeordnet ist.

Dadurch, dass bei der erfindungsgemäßen Vorrichtung das Deckelteil eine Anzahl von Abdeckabschnitten aufweist, die untereinander über Mittenscharniere gelenkig miteinander verbunden sind, und dass die Verschlussanordnung eine der Anzahl der Mittenscharniere entsprechende Anzahl von Schließstellungen bereitstellt, in denen das Deckelteil in unterschiedlichen Abständen von der Bodenwand angeordnet ist, lässt sich die Vorrichtung in verschiedenen Einbauumgebungen einsetzen, die unterschiedliche Aufnahmekapazitäten von Leitungen und/oder Einbauhöhen erfordern.

Bei einer zweckmäßigen Weiterbildung einer erfindungsgemäßen Vorrichtung ist an den Abdeckabschnitten eine Hemmanordnung vorhanden, mit der zwei benachbarte Abdeckabschnitte in einer Schließstellung in ihrer Relativbewegung zueinander gehemmt sind. Dadurch wird das Deckelteil gegen in Richtung der Bodenwand wirkende Belastungen stabilisiert.

Bei einer zweckmäßigen Ausführung der letztgenannten Weiterbildung weist die Hemmanordnung eine Anzahl von Rippen auf, die an den Abdeckabschnitten angeordnet sind und in jeweils einer Schließstellung mit ihren aufeinander zu weisenden Stirnseiten aneinander anliegend angeordnet sind. Diese Ausführung ist vorteilhafterweise sehr einfach herstellbar.

Bei einer weiteren zweckmäßigen Weiterbildung einer erfindungsgemäßen Vorrichtung ist an dem am weitesten von dem Randscharnier entfernt liegenden Abdeckabschnitt ein winklig, vorzugsweise rechtwinklig, zu diesem Abdeckabschnitt ausgerichteter Seitenrandabschnitt angeformt, an dem Verschlussstücke der Verschlussanordnung ausgebildet sind, die mit an einer Randwand ausgebildeten Verschlussgegenstücken der Verschlussanordnung zusammenwirken. Dadurch ist eine einfach herstellbare und stabile Verbindung zwischen dem Aufnahmeteil und dem Deckelteil erzielt.

Bei einer zweckmäßigen Ausführung der letztgenannten Weiterbildung sind die Verschlussgegenstücke im stirnseitigen Randbereich und im bodenwandseitigen Randbereich der Randwand ausgebildet. In diesen beiden Schließstellungen wird somit eine maximale beziehungsweise minimale Bauhöhe und Aufnahmekapazität bereitgestellt

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung mit einem geöffneten Deckelteil mit Blick in Einlegerichtung von Gegenständen auf eine Bodenwand eines Aufnahmeteiles,
- Fig. 2: in einer perspektivischen Ansicht das Ausführungsbeispiel gemäß Fig. 1 mit Blick entgegen der Einlegerichtung von Gegenständen,
- Fig. 3: das Ausführungsbeispiel gemäß Fig. 1 und Fig. 2 im Schnitt durch das Aufnahmeteil und das Deckelteil in Querrichtung bei geöffnetem Deckelteil,
- Fig. 4: das Ausführungsbeispiel in der Darstellung gemäß Fig. 3 mit dem Deckelteil in einer ersten Schließstellung und
- Fig. 5: das Ausführungsbeispiel in der Darstellung gemäß Fig. 3 mit dem Deckelteil in einer zweiten Schließstellung.

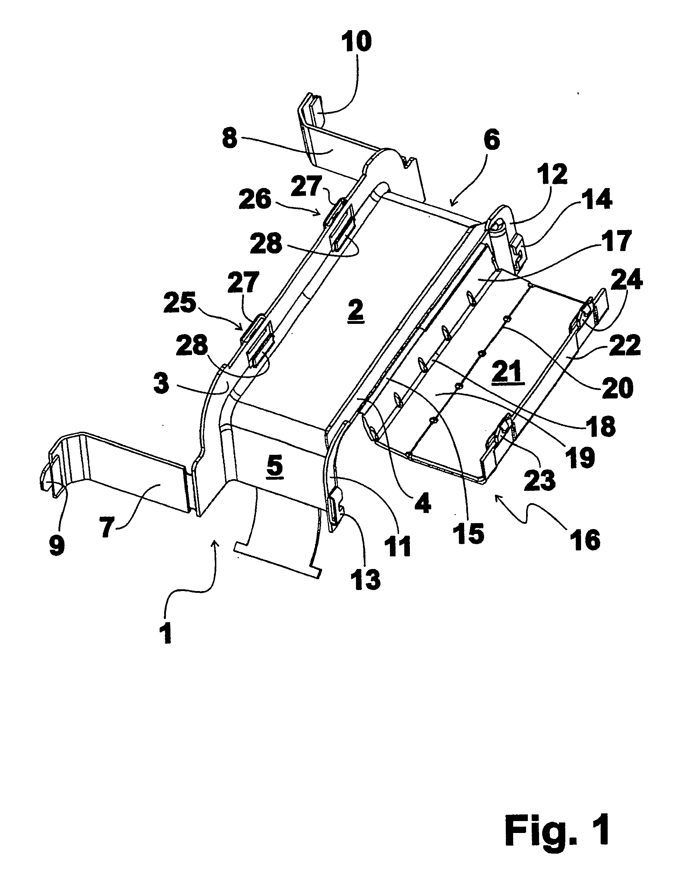

Fig. 1 zeigt in einer perspektivischen Ansicht ein Ausführungsbeispiel einer erfindungsgemäßen Vorrichtung mit einem als Kabelkanal ausgebildeten brückenartigen Aufnahmeteil 1, das über eine flache, bei diesem Ausführungsbeispiel rechteckförmige Bodenwand 2 verfügt. An den außenseitigen Rändern der Bodenwand 2 sind eine erste Randwand 3 und eine zweite Randwand 4 angesetzt, die im wesentlichen rechtwinklig zu der Bodenwand 2 ausgerichtet sind und sich in Längsrichtung der Bodenwand 2 erstrecken.

An den Querseiten der Bodenwand 2 sind zwei sich in gleicher Richtung im wesentlichen rechtwinklig zu der Bodenwand 2 erstreckende flache Seitenwände 5, 6 angefügt. Die erste Randwand 3 erstreckt sich entlang des jeweiligen außenseitigen Randes der Seitenwände 5, 6. An den im Bereich der Seitenwände 5, 6 liegenden Abschnitten der ersten Randwand 3 sind über Scharniere schwenkbaren Seitenabdeckungen 7, 8 angeformt, die an ihren gegenüber einem größeren flachen Abschnitt um etwa 90 Grad umgebogenen freien Enden mit Rastzungen 9, 10 ausgebildet sind. Der ersten Randwand 3 gegenüberliegend sind an den Rändern der Seitenwände 5, 6 rechtwinklig zu diesen ausgerichtete Stege 11,12 angeformt, die über Zungenaufnahmen 13, 14 verfügen, in die die Rastzungen 9, 10 einfügbar sind.

An der zweiten Randwand 4 ist über ein sich über den größten Teil der Länge der Bodenwand 2 erstreckendes Randscharnier 15 ein gegenüber dem Aufnahmeteil 1 schwenkbares Deckelteil 16 angeformt, das bei dem dargestellten Ausführungsbeispiel über einen mit dem Randscharnier 15 verbundenen ersten Abdeckabschnitt 17, über einen über ein erstes Mittenscharnier 18 mit dem ersten Abdeckabschnitt 17 verbundenen zweiten Abdeckabschnitt 19 und über einen über ein zweites Mittenscharnier 20 mit dem zweiten Abdeckabschnitt 19 verbundenen dritten Abdeckabschnitt 21 verfügt. Das Randscharnier 15 sowie die Mittenscharniere 18, 20 sind als sogenannte Filmscharniere mit einem verhältnismäßig dünnen Querschnitt ausgebildet.

An dem dritten Abdeckabschnitt 21 ist im wesentlichen rechtwinklig zu der dem zweiten Mittenscharnier 19 abgewandten Längsseite ein Seitenrandabschnitt 22 angeformt, an dessen von dem dritten Abdeckabschnitt 21 wegweisenden Stirnseiten bei dem dargestellten Ausführungsbeispiel ein erstes Verschlussstück 23 und ein zweites Verschlussstück 24 einer Verschlussanordnung ausgebildet sind.

An der ersten Randwand 3 sind in Längsrichtung der Bodenwand 2 jeweils auf Höhe der Verschlussstücke 23, 24 ein erstes Verschlussgegenstück 25 und ein zweites Verschlussgegenstück 26 der Verschlussanordnung vorhanden, die jeweils über eine von der zweiten Randwand 4 wegweisende außenseitige Verschlussaufnahme 27 und eine der zweiten Randwand 4 zugewandte Stützrippe 28 verfügen.

Aus Fig. 1 ist ersichtlich, dass in das Aufnahmeteil 1 zwischen die Randwände 3, 4 beziehungsweise die Stege 11, 12 in einer Einlegerichtung, beispielsweise in der Darstellung gemäß Fig. 1 von oben, in Fig. 1 nicht dargestellte Kabel oder andere längliche Gegenstände einlegbar und nach Schließen der Seitenabdeckungen 7, 8 sowie wie weiter unten näher erläutert des Deckelteiles 16 sind die länglichen Gegenstände gehalten.

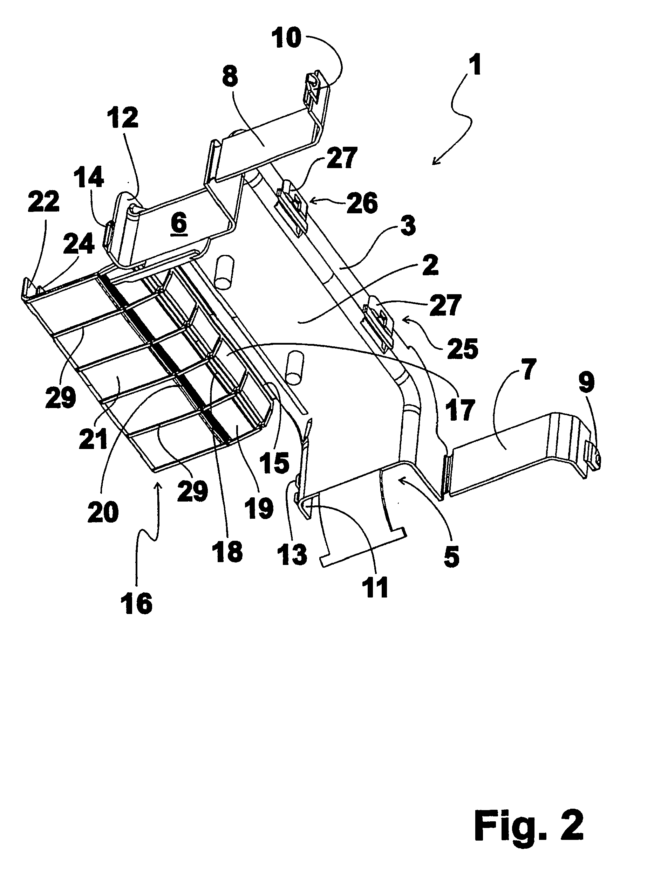

Fig. 2 zeigt in einer perspektivischen Ansicht das Ausführungsbeispiel gemäß Fig. 1 mit Blick entgegen der Einlegerichtung der Gegenstände. Aus Fig. 2 ist ersichtlich, dass an den Außenseiten der Abdeckabschnitte 17, 19, 21 eine Anzahl von Rippen 29 einer Hemmanordnung ausgebildet sind, die sich im wesentlichen rechtwinklig zu den Mittenscharnieren 18, 20 erstrecken, wobei jeweils eine Rippe 29 eines Abdeckabschnittes 17, 19, 21 mit einer gegenüberliegenden Rippe 29 eines benachbarten Abdeckabschnittes 17, 19, 21 fluchtet.

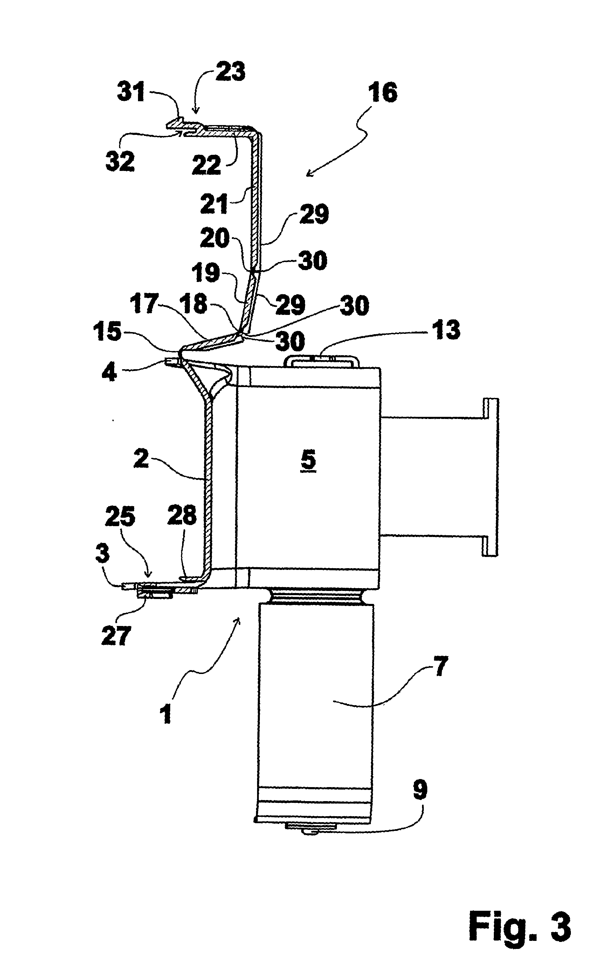

Fig. 3 zeigt das Ausführungsbeispiel gemäß Fig. 1 und Fig. 2 im Schnitt durch das Aufnahmeteil 1 und das Deckelteil 16 in Querrichtung bei geöffnetem Deckelteil 16. Aus Fig. 3 ist ersichtlich, dass bei einer gewinkelten Ausrichtung der Abdeckabschnitte 17, 19, 21 zueinander aufeinander zu weisenden Stirnseiten 30 einander gegenüberliegenden Rippen 29 voneinander beabstandet sind, während sie bei einer flachwinkligen oder ebenen Anordnung von Abdeckabschnitten 17, 19, 21 aneinander anliegen, so dass dadurch eine weitere relative Schwenkbewegung von benachbarten Abdeckabschnitten 17, 19, 21 im Rahmen der Materialeigenschaften der Rippen 29 wenigstens gehemmt oder sogar im wesentlichen vollständig blockiert ist.

Bei rechtwinklig zu der Längsrichtung der Rippen 29 ausgerichteten Stirnseiten 30 tritt die Hemmwirkung bei einem Winkel von 180 Grad ein, während bei entgegengerichtet schräg zu der Längsrichtung der Rippen 29 ausgerichteten Stirnseiten je nach Orientierung der Schrägen die Hemmwirkung bereits bei einem Winkel von weniger als 180 Grad oder erst bei einem Winkel von mehr als 180 Grad eintritt.

Weiterhin ist aus Fig. 3 erkennbar, dass die identisch aufgebauten Verschlussstücke 23, 24 eine vorstehende Rastnase 31 sowie eine Stütznut 32 aufweisen.

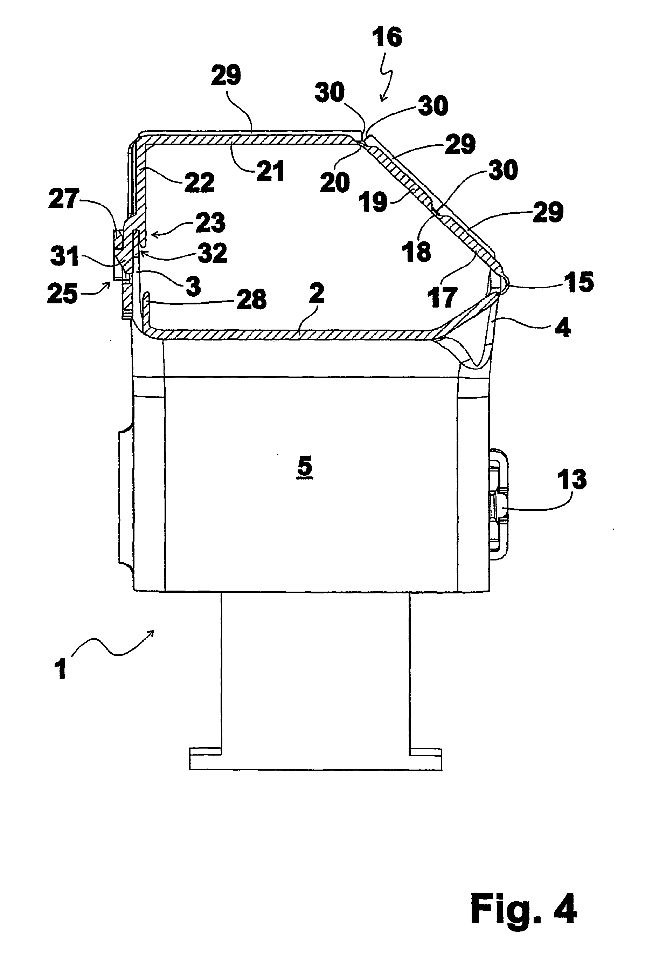

Fig. 4 zeigt das Ausführungsbeispiel in der Darstellung gemäß Fig. 3 mit dem Deckelteil 16 in einer ersten Schließstellung, in der der obere Rand der ersten Randwand 3 in die Stütznuten 32 eingreift und die Rastnasen 31 die außenseitige Verschlussaufnahmen 27 hintergreifen. Aus Fig. 4 ist ersichtlich, dass in der ersten Schließstellung mit einer erhabensten Beabstandung des dritten Abdeckabschnittes 21 von der Bodenwand 2 aufgrund der entsprechend eingerichteten Breite des ersten Abdeckabschnittes 17 und des zweiten Abdeckabschnittes 19 sowie der im wesentlichen rechtwinkligen Ausrichtung der Stirnseiten 30 zur Längsrichtung der Rippen 29 der erste Abdeckabschnitt 17 und der zweite Abdeckabschnitt 19 im wesentlichen in einer Ebene liegen und in dieser Ausrichtung durch die durch die Rippen 29 gebildete Hemmanordnung gegen in Richtung der Bodenwand 2 einwirkende Kräfte widerstandsfähig sind.

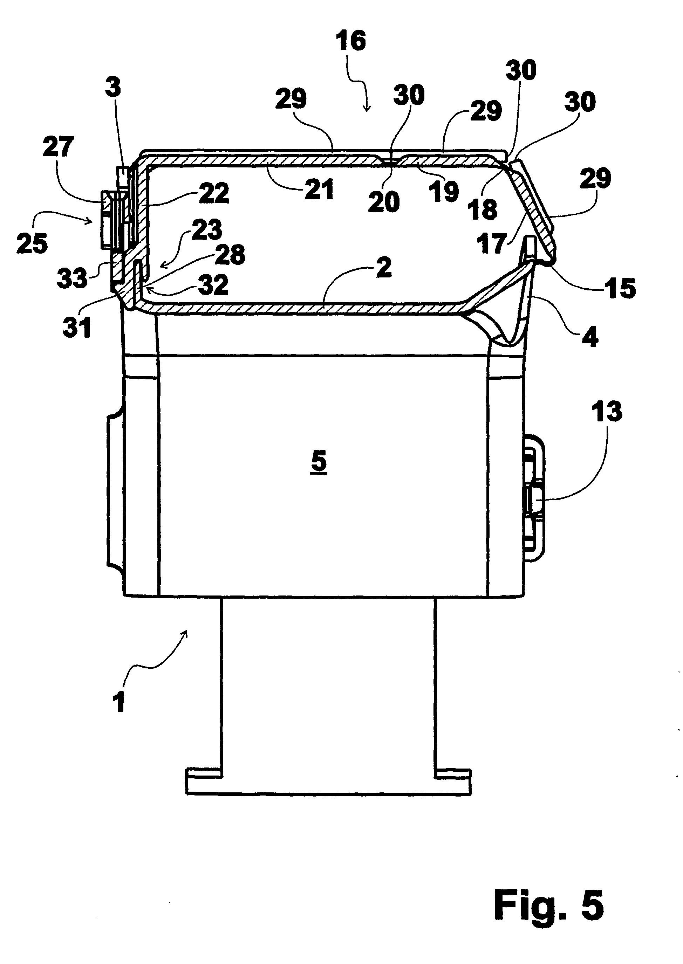

Fig. 5 zeigt das Ausführungsbeispiel in der Darstellung gemäß Fig. 3 mit dem Deckelteil 16 in einer zweiten Schließstellung, in der die Stützrippen 28 in die Stütznuten 32 eingreifen, während die Rastnasen 31 den außenseitigen Verschlussaufnahmen 27 gegenüberliegende innenseitige Verschlussaufnahmen 33 der Verschlussgegenstücke 25, 26 hintergreifen. Aus Fig. 5 ist ersichtlich, dass in der zweiten Schließstellung mit der am nächsten benachbarten Anordnung des dritten Abdeckabschnittes 21 zu der Bodenwand 2 aufgrund der entsprechend eingerichteten Breite des zweiten Abdeckabschnittes 19 und des dritten Abdeckabschnittes 21 sowie der im wesentlichen rechtwinkligen Ausrichtung der Stirnseiten 30 zur Längsrichtung der Rippen 29 der zweite Abdeckabschnitt 19 und der dritte Abdeckabschnitt 21 im wesentlichen in einer Ebene liegen und in dieser Ausrichtung durch die durch die Rippen 29 gebildete Hemmanordnung gegen in Richtung der Bodenwand 2 einwirkende Kräfte ebenfalls widerstandsfähig sind.

Aus Fig. 4 und Fig. 5 ist somit ersichtlich, dass bei dem Ausführungsbeispiel wahlweise in der ersten Schließstellung die größere Bauhöhe sowie die größere Aufnahmekapazität vorhanden ist, während in der zweiten Schließstellung die geringere Bauhöhe bei geringerer Aufnahmekapazität eingenommen wird.

## Patentansprüche

1. Vorrichtung zur Aufnahme von länglichen Gegenständen, insbesondere von elektrischen Leitungen und/oder Fluidleitungen, mit einem eine Bodenwand (2) und zwei sich gegenüberliegende Randwände (3, 4) aufweisenden Aufnahmeteil (1) sowie mit einem über ein Randscharnier (15) schwenkbar an dem Aufnahmeteil (1) angebrachten Deckelteil (16), das über eine dem Randscharnier (15) gegenüberliegende Verschlussanordnung (23, 24, 25, 26) mit dem Aufnahmeteil (1) verbindbar ist, **dadurch gekennzeichnet, dass** das Deckelteil (16) wenigstens drei Abdeckabschnitte (17, 19, 21) aufweist, wobei jeweils zwischen benachbarten Abdeckabschnitten (17, 19, 21) ein Mittenscharnier (18, 20) ausgebildet ist und dass die Verschlussanordnung (23, 24, 25, 26) eine der Anzahl der Mittenscharniere (18, 20) entsprechende Anzahl von Schließstellungen bereitstellt, in denen die Abdeckabschnitte (17, 19, 21) in unterschiedlichen Abständen von der Bodenwand (2) angeordnet ist.

2. Vorrichtung nach Anspruch 1, wobei an den Abdeckabschnitten (17, 19, 21) eine Hemmanordnung (29) vorhanden ist, mit der zwei benachbarte Abdeckabschnitte (17, 19, 21) in einer Schließstellung in ihrer Relativbewegung zueinander gehemmt sind.

3. Vorrichtung nach Anspruch 2, wobei die Hemmanordnung eine Anzahl von Rippen (29) aufweist, die an den Abdeckabschnitten (17, 19, 21) angeordnet sind und in jeweils einer Schließstellung mit ihren aufeinander zu weisenden Stirnseiten (30) aneinander anliegend angeordnet sind.

4. Vorrichtung nach einem der Ansprüche 1 bis 3, wobei an dem am weitesten von dem Randscharnier (15) entfernt liegenden Abdeckabschnitt (21) ein winklig, vorzugsweise rechtwinklig, zu diesem Abdeckabschnitt (21) ausgerichteter Seitenrandabschnitt (22) angeformt ist, an dem Verschlussstücke (23, 24) der Verschlussanordnung ausgebildet sind, die mit an einer Randwand ausgebildeten Verschlussgegenstücken (25, 26) der Verschlussanordnung zusammenwirken.

5. Vorrichtung nach Anspruch 4, wobei die Verschlussgegenstücke (25, 26) im stirnseitigen Randbereich und im bodenwandseitigen Randbereich der betreffenden Randwand (3) ausgebildet sind.

## Claims

1. Device for receiving elongated objects and in particular electrical cables and/or ducts for fluids, having a receiving part (1) which has a bottom wall (2) and two edge walls (3, 4) situated opposite one another, and having a cover part (16) which is mounted on the receiving part (1) to be pivotable by means of an edge hinge (15) and which can be connected to the receiving part (1) by means of a closure arrangement (23, 24, 25, 26) situated opposite the edge hinge (15), **characterised in that** the cover part (16) has at least three cover portions (17, 19, 21), a central hinge (18, 20) being formed between each pair of adjoining cover portions (17, 19, 21), and **in that** the closure arrangement (23, 24, 25, 26) provides a number of closed positions corresponding to the number of central hinges (18, 20), in which closed positions the cover portions (17, 19, 21) are arranged at different distances from the bottom wall (2).

2. Device according to claim 1, wherein there is present on the cover portions (17, 19, 21) an obstructing arrangement (29) by which the movement relative to one another of two adjoining cover portions (17, 19, 21) is obstructed in a closed position.

3. Device according to claim 2, wherein the obstructing arrangement has a plurality of ribs (29) which are arranged on the cover portions (17, 19, 21) and which are arranged to rest against one another by their end-faces (30) which face towards one another in respective ones of the closed positions.

4. Device according to one of claims 1 to 3, wherein there is integrally formed on the cover portion (21) situated furthest away from the edge hinge (15) a lateral edge portion (22) which is orientated at an angle, preferably a right angle, to the said cover portion (21) and on which are formed closure pieces (23, 24) of the closure arrangement which co-operate with mating closure pieces (25, 26) of the closure arrangement which are formed on an edge wall.

5. Device according to claim 4, wherein the mating closure pieces (25, 26) are formed in that edge region of the relevant edge wall (3) which forms the facing edge and in that region thereof which is adjacent the bottom wall.

## Revendications

1. Dispositif de montage en position d'objets de forme allongée, en particulier de canalisations électriques et, ou encore, de conduites véhiculant des fluides, se composant d'un élément définissant un logement d'insertion (1), constitué par une paroi de fond (2) et deux parois de rive (3, 4) à disposition diamétralement opposée, ainsi que d'un élément formant étrier de recouvrement (16) disposé attenant à l'élément formant logement d'insertion (1) avec la possibilité d'être rabattu sur celui-ci par l'intermédiaire d'une liaison articulée de rive (15), qui est destiné à être raccordé à l'élément formant logement d'insertion (1) au moyen d'un dispositif de verrouillage (23, 24, 25, 26) diamétralement opposé à la liaison articulée de rive (15), **caractérisé en ce que** l'élément formant étrier de recouvrement 16) se compose d'au moins trois segments de recouvrement (17, 19, 21), une liaison articulée médiane (18, 20) étant en l'occurrence respectivement prévue entre chacun des segments de recouvrement voisins et **en ce que** le dispositif de verrouillage (23, 24, 25, 26) définit un nombre de positions de verrouillage correspondant au nombre de liaisons articulées médianes (18, 20) présentes, dans lesquelles les segments de recouvrement (17, 19, 21) se trouvent disposés à des distances différentes de la paroi formant fond (2).

2. Dispositif selon la revendication 1, dans lequel il est prévu au niveau des segments de recouvrement (17, 19, 21) un dispositif d'immobilisation (29), qui interdit tout mouvement relatif entre deux segments de recouvrement (17, 19, 21) voisins lorsqu'ils se trouvent dans leur position de verrouillage.

3. Dispositif selon la revendication 2, dans lequel le dispositif d'immobilisation comporte un certain nombre de nervures (29), qui sont ménagées sur les segments de recouvrement (17, 19, 21) et qui sont amenées dans une disposition côte à côte, dans une position de verrouillage respective, au niveau de leurs faces antérieures (30) orientées l'une vers l'autre.

4. Dispositif selon l'une des revendications 1 à 3, dans lequel il est prévu, réalisé solidaire par moulage du segment de recouvrement (21) se trouvant dans la position la plus éloignée de la liaison articulée de rive (15), une portion latérale de rive (22) orientée de manière angulaire, de préférence selon une disposition en angle droit, par rapport à ce segment de recouvrement (21), sur laquelle sont disposés des organes de verrouillage (23, 24) du dispositif de verrouillage, qui opèrent en correspondance d'accouplement réciproque avec des organes de verrouillage conjugués (25, 26) du dispositif de verrouillage, prévus sur une paroi de rive.

5. Dispositif selon la revendication 4, dans lequel les organes de verrouillage conjugués (25, 26) sont réalisés dans la zone de rive frontale et dans la zone de rive correspondant au côté de la paroi formant fond de la paroi de rive (3) concernée.
